# EUROPÄISCHE PATENTSCHRIFT

(11) **EP 2 711 225 B1**
(45) Veröffentlichungstag und Bekanntmachung des Hinweises auf die Patenterteilung: **23.11.2016**
(21) Anmeldenummer: 13184386.4
(22) Anmeldetag: 13.09.2013
(51) Int. Cl.: B60K 15/03, B60K 15/077

(54) **Flüssigkeitstank mit einer Schwallwand**
Liquid tank with a baffle wall
Réservoir de liquide doté d'une cloison anti-clapot

(30) Priorität: 20.09.2012 DE 102012108851
(43) Veröffentlichungstag der Anmeldung: 26.03.2014
(73) Patentinhaber: VERITAS AG, 63571 Gelnhausen (DE)
(72) Erfinder: Rösch, Thomas, 63589 Linsengericht (DE); Maiberger, Simon, 63599 Biebergemünd (DE)
(74) Vertreter: Patentship Patentanwaltsgesellschaft mbH

(56) Entgegenhaltungen:
- DE-A1-102010 032 278
- FR-A1- 2 775 225
- JP-A- 2007 237 843
- US-A- 5 960 981
- US-A- 6 138 859
- US-A1- 2006 071 003
- US-A1- 2008 035 649
- US-A1- 2011 139 793

## Beschreibung

Die vorliegende Erfindung betrifft einen Flüssigkeitstank mit einer Schwallwand, insbesondere für ein Kraftfahrzeug.

Tanks für Kraftfahrzeuge werden oftmals mittels einer Blasformtechnik hergestellt. Eine gezielte Beeinflussung der Festigkeitseigenschaften ist bei dieser Technik nur durch eine allgemeine Änderung der Wandstärke möglich. Diese Vorgehensweise ist jedoch unflexibel und es entsteht ein hoher ungenutzter Materialaufwand. Eine gezielte Verstärkung einzelner Tankbereiche ist nur bedingt möglich. Geometriesprünge können bei den Umformprozessen nicht realisiert werden. Zusätzliche konstruktive Elemente wie Schwallwände müssen einzeln durch zusätzliche Schweißungen angebracht werden. Die Zugänglichkeit bei einer Montage dieser Elemente ist im Inneren des Tanks sehr stark eingeschränkt. Dies führt zu einer Blindmontage oder dazu, dass zusätzliche Montage-Löcher geschaffen werden müssen, die wieder mit Deckeln verschlossen oder verschweißt werden. Das Einbringen der Elemente in das Tankinnere und anschließendes Umblasen schränkt die konstruktiven Möglichkeiten stark ein.

Die Druckschrift DE 8 615 526 U1 beschreibt einen Brennstofftank aus Kunststoff für Fahrzeuge. Der Brennstofftank umfasst zwei Halbschalen, die entsprechend eine obere Halbschale und eine untere Bodenhalbschale des Brennstofftanks bilden. Die Halbschalen weisen Wände auf, die als Trenneinrichtungen gegen Flüssigkeitsschlagen für den Brennstoff innerhalb des Brennstofftanks dienen. Allerdings weisen die Wände lediglich eine geringe Festigkeit auf und können bei starken Beschleunigungen des Brennstofftanks brechen. Wird ein derartiger Tank mit Wasser statt mit Brennstoff befüllt, steigt durch die höhere Dichte des Wassers und die daraus resultierende höhere träge Masse die Bruchgefahr der Schwallwände.

Die gattungsbildende Druckschrift JP 2007-237843 A beschreibt einen Kraftstofftank mit einer Trennplatte, die durch zwei Befestigungsteile am Tankkörper befestigt ist. In einer Variante sind die Befestigungsteile zwischen oberen und unteren Verstärkungsteilen des Tankkörpers befestigt, in einer anderen Variante sind die Befestigungsteile jeweils an einen Kontaktbereich zwischen oberen und unteren Verstärkungsteilen angeklipst. Die Druckschrift beschreibt dabei zylinderförmige Verstärkungsteile, die einen Abschnitt der Flüssigkeitstankschale bilden. Die Verstärkungsteile stehen mit einer einzigen Trennwand in Kontakt.

Die Druckschrift US 2011/0139793 A1 beschreibt einen Kraftstofftank, der eine Vertiefung in der unteren Tankinnenwand aufweist, in die ein Haltefuß eingesetzt ist, der mit einem Haltestab verbunden ist, an dem eine Trennwand befestigt ist. Die Druckschrift beschreibt eine Trennwand, die sich ausgehend von dem Haltestab in zwei entgegengesetzte Richtungen erstreckt. Die in der Druckschrift offenbarte Halterung der Trennwand umfasst den Haltestab, der durch den Haltefuß mit der Flüssigkeitstankschale verbunden ist. Die Trennwandhalterung ist kein integraler Bestandteil der Flüssigkeitstankschale, sondern ein separates Bauteil, das nachträglich eingesetzt wird.

Die Druckschrift US 6,138,859 A beschreibt einen Kraftstofftank, in den säulenförmige Stützen zwischen der unteren und oberen Tankhalbschale eingesetzt sind, sowie eine Trennwand mit verschiedenen Wandabschnitten, die zwischen den Stützen angeordnet ist. Die Stützen sind durch ein separates Endstück mit der Tankinnenschale verbunden und sind kein Bestandteil der Flüssigkeitstankschale. Die Stützen stehen mit einer einzigen Trennwand in Kontakt, die aus mehreren Wandabschnitten besteht.

Die Druckschrift US 2006/0071003 A1 beschreibt einen Kraftstofftank mit einem Tankkörper, in den wellenbrechende Platten integriert sind, die geeignet sind, die Bewegung von Kraftstoff im Kraftstofftank zu unterdrücken. Die säulenförmigen Abschnitte der Platten sind integral in dem Tankhauptkörper bereitgestellt. Die Abschnitte stehen nur mit einer einzigen Platte in Kontakt.

Die Druckschrift US 5,960,981 A beschreibt eine in Wassertanks von Feuerbekämpfungsfahrzeugen verwendete Vorrichtung, die aus mehreren sich kreuzenden longitudinalen und transversalen Trennplatten besteht, die an der Bodenwand des Tanks befestigt sind. Die Druckschrift zeigt keine säulenförmige Halterung der Trennplatten, die ein Teil der Tankschale ist, und von der sich mehrere Trennplatten radial erstrecken.

In Druckschrift DE 10 2010 032 278 A1 ist ein Kraftstoffbehälter mit Schwallwandelementen beschrieben, die aus einem Befestigungsfuß bestehen, der auf der Innenseite der Behälterwand aufgebracht ist. Der Befestigungsfuß ist mit einem flexiblen Wandabschnitt verrastet. Der Befestigungsfuß stellt keine säulenförmige Halterung dar und ist mit einem einzigen Wandabschnitt verbunden.

Die Druckschrift FR 2 775 225 A1 beschreibt einen Gegenstand zur Geräuschunterdrückung in einem Kraftstofftank für Fahrzeuge, der aus einer flexiblen Trennwand besteht, die an einer Benzinfalle befestigt ist. Die Benzinfalle weist eine zylinderförmige Form auf und ist mit einer einzigen Trennwand verbunden.

In Druckschrift US 2008/0035649 A1 wird ein Kraftstofftank für Fahrzeuge beschrieben, der durch Separierungswände in unterschiedliche Tankkammern aufgeteilt ist. Die Separierungswände weisen mehrere Öffnungen auf, von denen eine Öffnung durch ein Ventil verschlossen werden kann. Die Separierungswände sind direkt mit der Innenwand des Kraftstofftanks verbunden und weisen keine Wandhalterungen auf, die in das Innere des Tanks hineinragen.

Es ist die der Erfindung zugrundeliegende Aufgabe, einen Flüssigkeitstank mit Schwallwänden anzugeben, deren Stabilität verbessert ist.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Flüssigkeitstank gelöst, mit einer Flüssigkeitstankschale, einer Schwallwandhalterung, die sich von einer Innenwandung der Flüssigkeitstankschale erstreckt, und einer Schwallwand, die an der Schwallwandhalterung befestigt ist, wobei die Schwallwandhalterung ein säulenförmiger Abschnitt der Flüssigkeitstankschale ist, wobei der Flüssigkeitstank eine weitere Schwallwand umfasst, die an der Schwallwandhalterung befestigt ist, und wobei die Schwallwände radial von der Schwallwandhalterung in unterschiedlichen Richtungen in das Innere des Flüssigkeitstanks hineinragen. Durch die weitere Schwallwand, die an der Schwallwandhalterung befestigt ist wird beispielsweise der technische Vorteil erreicht, dass sich Geräusche durch eine Bewegung der Flüssigkeit noch weiter reduzieren lassen. Durch die säulenförmige Ausgestaltung der Flüssigkeitstankschale wird beispielsweise der technische Vorteil erreicht, dass sich mehrere Schwallwände an dem säulenförmigen Abschnitt befestigen lassen. Die Schwallwand kann zusätzlich an der Innenwandung der Flüssigkeitstankschale befestigt sein. Der Flüssigkeitstank ist beispielsweise ein Flüssigkeitstank für ein Kraftfahrzeug, beispielsweise ein Kraftstofftank oder ein Tank für eine wässrige Harnstofflösung (Additiv-Tank bzw. SCR-Tank). Durch die Unterstützung der Schwallwandhalterung wird beispielsweise der technische Vorteil erreicht, dass die Stabilität der Schwallwand verbessert wird.

In einer vorteilhaften Ausführungsform verbindet die Schwallwandhalterung die Flüssigkeitstankschale mit einer weiteren Flüssigkeitstankschale. Dadurch wird beispielsweise der technische Vorteil erreicht, dass sich die Stabilität des Flüssigkeitstanks erhöht.

In einer weiteren vorteilhaften Ausführungsform ist die Flüssigkeitstankschale ein Kunststoffformteil. Dadurch wird beispielsweise der technische Vorteil erreicht, dass sich der Flüssigkeitstank auf einfache Weise herstellen lässt.

In einer weiteren vorteilhaften Ausführungsform ist die Schwallwandhalterung langgestreckt. Dadurch wird beispielsweise der technische Vorteil erreicht, dass eine langestreckte Befestigung der Schwallwand an der Schwallwandhalterung ermöglicht wird.

In einer weiteren vorteilhaften Ausführungsform ist die Schwallwand plattenförmig oder gekrümmt. Dadurch wird beispielsweise der technische Vorteil erreicht, dass die Wand optimal in die Schalengeometrie angepasst werden kann.

In einer weiteren vorteilhaften Ausführungsform ist die Schwallwand seitlich an der Schwallwandhalterung befestigt. Dadurch wird beispielsweise der technische Vorteil erreicht, dass die Schwallwand seitlich stabilisiert ist.

In einer weiteren vorteilhaften Ausführungsform weist die Schwallwandhalterung Halterippen zum Stabilisieren der Schwallwandhaltung auf. Dadurch wird beispielsweise der technische Vorteil erreicht, dass sich die Stabilität noch weiter verbessert.

In einer weiteren vorteilhaften Ausführungsform sind die Flüssigkeitstankschale und Schwallwandhalterung einstückig durch ein Spritzgussteil gebildet. Dadurch wird beispielsweise der technische Vorteil erreicht, dass die Flüssigkeitstankschale zusammen mit der Schwallwand in einem Arbeitsgang hergestellt werden kann.

In einer weiteren vorteilhaften Ausführungsform umfasst die Schwallwand zumindest eine Öffnung zum Hindurchfließen einer Flüssigkeit. Die Öffnung kann in einem unteren Bereich oder in Bodennähe angeordnet sein. Dadurch wird beispielsweise der technische Vorteil erreicht, dass eine Verteilung der Flüssigkeit im Inneren des Flüssigkeitstanks erleichtert wird.

In einer weiteren vorteilhaften Ausführungsform ist die Öffnung in der Schwallwand in der Nähe der Innenwandung des Flüssigkeitstanks angeordnet. Dadurch wird beispielsweise der technische Vorteil erreicht, dass in der Mitte des Flüssigkeitstanks große Flüssigkeitsbewegungen verhindert werden, während kleine Flüssigkeitsströmungen am Rand zum Verteilen der Flüssigkeit möglich sind.

In einer weiteren vorteilhaften Ausführungsform umfasst die Schwallwand eine Ventilklappe zum Sperren einer Durchflussrichtung durch die Öffnung. Dadurch wird beispielsweise der technische Vorteil erreicht, dass die Flüssigkeit in eine vorgegebene Richtung kanalisiert werden kann.

In einer weiteren vorteilhaften Ausführungsform umfasst der Flüssigkeitstank eine weitere Schwallwandhalterung und die Schwallwand ist an der weiteren Schwallwandhalterung befestigt. Dadurch wird beispielsweise der technische Vorteil erreicht, dass sich die Stabilität der Schwallwand noch weiter verbessert.

In einer weiteren vorteilhaften Ausführungsform umfasst der Flüssigkeitstank eine weitere Flüssigkeitstankschale, die mit der Flüssigkeitstankschale verbunden ist. Die zusätzliche Flüssigkeitstankschale kann die gleichen Merkmale wie die Flüssigkeitstankschale aufweisen. Dadurch wird beispielsweise der technische Vorteil erreicht, dass sich die vorteilhaften Effekte auf beiden Seiten des Flüssigkeitstanks realisieren lassen.

In einer weiteren vorteilhaften Ausführungsform ist eine Schwallwandhalterung einer Flüssigkeitstankschale mit einer gegenüberliegenden Schwallwandhalterung einer weiteren Flüssigkeitstankschale verbunden. Dadurch wird der technische Vorteil erreicht, dass sich die mechanische Stabilität des Flüssigkeitstanks verbessert.

In einer weiteren vorteilhaften Ausführungsform weist die Schwallwandhalterung eine Kontaktfläche zum Verbinden mit einer gegenüberliegenden Schwallwandhalterung auf. Dadurch wird der technische Vorteil erreicht, dass die Schwallwandhalterungen stabil miteinander verbunden werden können.

In einer weiteren vorteilhaften Ausführungsform umfasst die Kontaktfläche eine Vertiefung zum Aufnehmen eines Schweißaustriebs. Dadurch wird der technische Vorteil erreicht, dass ein Schweißaustrieb nicht an die Innenwandung der Flüssigkeitstankschale gelangt und von dort aus abbröckelt.

In einer weiteren vorteilhaften Ausführungsform ist die Vertiefung kreisförmig auf der Kontaktfläche gebildet. Dadurch wird der technische Vorteil erreicht, dass der Schweißaustrieb besonders wirksam aufgenommen werden kann.

In einer weiteren vorteilhaften Ausführungsform umfasst die Kontaktfläche mehrere konzentrische kreisförmige und/oder gekreuzte Vertiefungen. Dadurch wird der technische Vorteil erreicht, dass die Aufnahme des Schweißaustriebs noch weiter verbessert wird.

In einer weiteren vorteilhaften Ausführungsform ist die Schwallwandhalterung durch einen Hohlkörper mit einem Hohlraum gebildet. Dadurch wird der technische Vorteil erreicht, dass sich ein Materialaufwand zum Bilden der Schwallwandhalterung vermindert.

In einer weiteren vorteilhaften Ausführungsform ist der Hohlraum von einer Außenwandung her zugänglich, um eine Schwallwandhalterung mit einer gegenüberliegenden Schwallwandhalterung zu verbinden. Dadurch wird der technische Vorteil erreicht, dass die Schwallwandhalterungen von einer Außenseite des Tanks verbunden werden können.

In einer weiteren vorteilhaften Ausführungsform ist die Schwallwandhalterung mit einer gegenüberliegenden Schwallwandhalterung verschweißt, verklebt, gerastet oder geschraubt. Dadurch wird der technische Vorteil erreicht, dass sich die Verbindung der beiden Flüssigkeitstankschalen besonders einfach erzielen lässt.

In einer weiteren vorteilhaften Ausführungsform ist die Schwallwandhalterung im Zentrum einer Flüssigkeitstankschale angeordnet. Dadurch wird der technische Vorteil erreicht, dass eine Flüssigkeitsbewegung in der Mitte des Flüssigkeitstanks besonders wirksam verhindert werden kann.

Ausführungsbeispiele der Erfindung sind in den Zeichnungen dargestellt und werden im Folgenden näher beschrieben.

Es zeigen:
- Fig. 1: eine Ansicht eines Flüssigkeitstanks mit zwei Flüssigkeitstankschalen;
- Fig. 2: eine weitere Ansicht des Flüssigkeitstanks mit zwei Flüssigkeitstankschalen;
- Fig. 3: eine Ansicht einer Flüssigkeitstankschale;
- Fig. 4: eine weitere Ansicht der Flüssigkeitstankschale;
- Fig. 5: eine weitere Ansicht der Flüssigkeitstankschale;
- Fig. 6: eine Teilansicht der Flüssigkeitstankschale;
- Fig. 7: eine weitere Ansicht der Flüssigkeitstankschale;
- Fig. 8: eine weitere Ansicht der Flüssigkeitstankschale;
- Fig. 9: eine Ansicht der Flüssigkeitstankschale von unten;
- Fig. 10A: eine schematische Ansicht der Flüssigkeitstankschale mit gekrümmten Schwallwänden; und
- Fig. 10B: eine schematische Ansicht der Flüssigkeitstankschale mit einer Anordnung aus mehreren Schwallwänden um eine Pumpe.

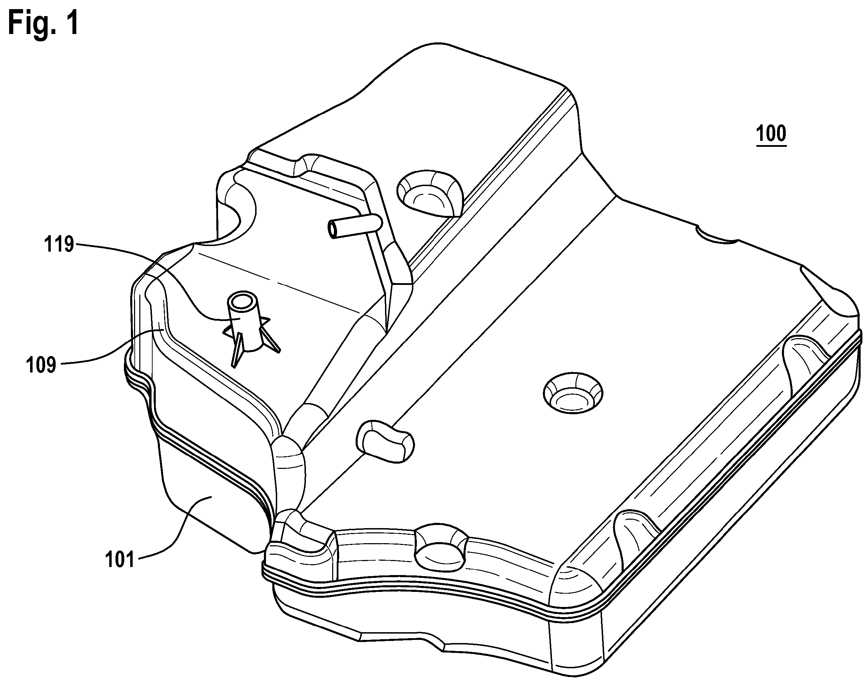

Fig. 1 zeigt eine Ansicht eines Flüssigkeitstanks 100 mit einer oberen Flüssigkeitstankschale 109 und einer unteren Flüssigkeitstankschale 101. Der Flüssigkeitstank 100 ist beispielsweise ein Brennstofftank oder ein Tank für eine wässrige Harnstofflösung in einem Fahrzeug. Die Flüssigkeitstankschalen 101 und 109 sind beispielsweise Kunststoffformteile, die im Spritzgussverfahren hergestellt sind. Die Kunststoffe können beispielsweise Polyolefine wie Polyethylen oder Polypropylen, Polycarbonat, Polystyrol, Polyamid, oder Polyoxymethylen (POM) sein. Die beiden Flüssigkeitstankschalen 101 und 109 sind im Randbereich miteinander verklebt oder verschweißt und bilden im Inneren einen Hohlraum, in den eine Flüssigkeit gefüllt werden kann. Der Flüssigkeitstank 100 weist einen Einfüllstutzen 119 auf, über den die Flüssigkeit in den Flüssigkeitstank 100 eingefüllt werden kann.

Durch die Verwendung einer Spritzgussformtechnik können die Flüssigkeitstankschalen 101 und 109 gewichts- und kostenoptimiert hergestellt werden, beispielsweise durch eine genaue Definition der benötigten Wandstärken. Daneben können ohne zusätzliche Fertigungsschritte Bauteile wie Pumpenflansche, Stutzen oder Halterungen integriert werden. Im Tankinneren wird eine deutlich vereinfachte Montage erreicht, da durch die offenen Flüssigkeitstankschalen 101 und 109 eine gute Zugänglichkeit gewährleistet wird. Die Festigkeit der Flüssigkeitstanks 100 lässt sich durch Anpassung einer Anordnung und Gestaltung von Verstärkungsrippen und Schwallwänden 107 gezielt lokal beeinflussen.

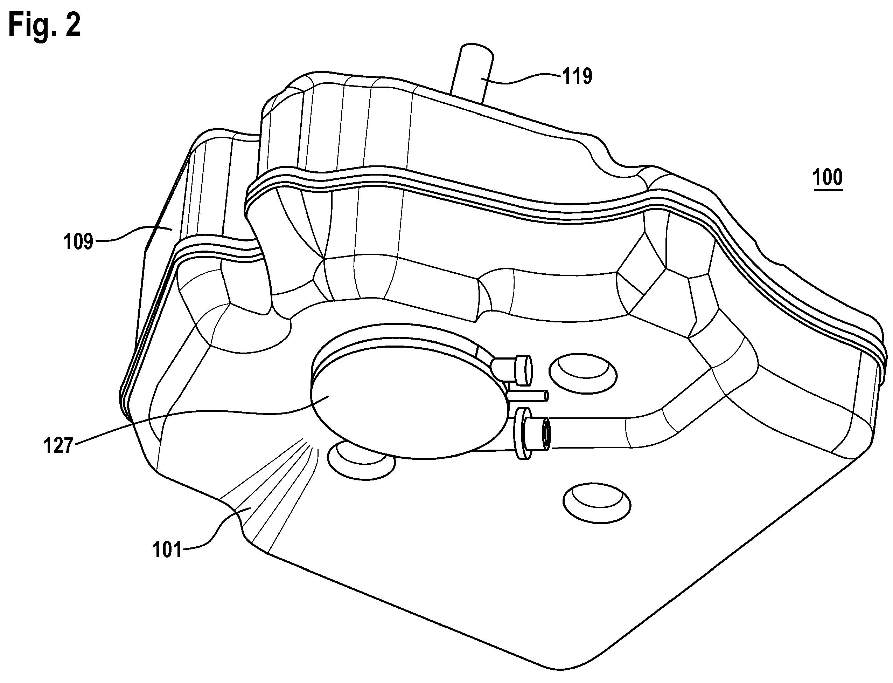

Fig. 2 zeigt eine weitere Ansicht des Flüssigkeitstanks 100 mit der oberen Flüssigkeitstankschale 109 und der unteren Flüssigkeitstankschale 101. In der Flüssigkeitstankschale 101 ist eine Pumpe 127 eingesetzt, um die Flüssigkeit zu fördern.

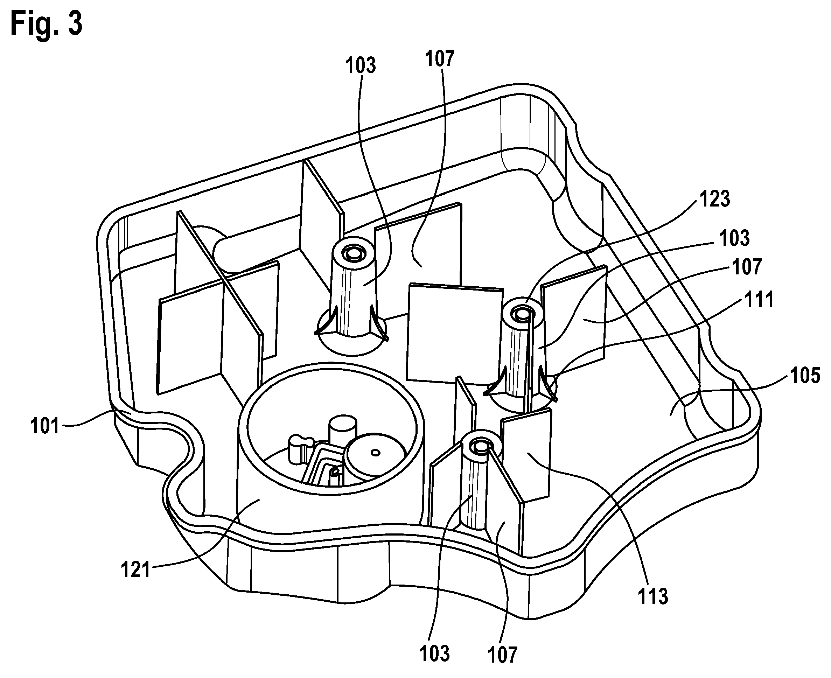

Fig. 3 zeigt eine Ansicht der Flüssigkeitstankschale 101, durch die die Unterseite des Flüssigkeitstanks 100 gebildet wird. Die Flüssigkeitstankschale 101 umfasst auf einer Innenseite 105 einen Schwalltopf 121 und mehrere Schwallwandhalterungen 103, die sich von einer Innenwandung 105 der Flüssigkeitstankschale 101 senkrecht in das Innere des Flüssigkeitstanks 100 erstrecken. Die Schwallwand 107 ist beispielsweise gegenüber der Schwallwand 113 in einem anderen Winkel an der Schwallwandhalterung 103 befestigt.

Die Schwallwandhalterungen 103 dienen zur Stabilisierung oder Unterstützung einer oder mehrerer Schwallwände 107 im Inneren des Flüssigkeitstanks 100. Die Schwallwandhalterungen 103 werden durch säulenförmige Abschnitte der Flüssigkeitstankschale 101 gebildet, die in das Innere des Flüssigkeitstanks 100 hineinragen. Die gezeigten Schwallwandhalterungen 103 sind zylinderförmig. Im Allgemeinen können die Schwallwandhalterungen 103 jedoch auch andere Formen aufweisen, beispielsweise pyramidal oder quaderförmig.

Die Schwallwandhalterungen 103 weisen eine Verbindungsfläche 123 zum Verbinden der Schwallwandhalterung 103 mit einer Schwallwandhalterung der Gegenschale auf. Die Verbindungsfläche 123 setzt auf die gegenüberliegende Verbindungfläche einer Schwallwandhalterung der entgegengesetzten Flüssigkeitstankschale 109 auf und wird mit dieser verschweißt. Dadurch erhöht sich die Gesamtstabilität des Flüssigkeitstanks 100.

Um die Festigkeit der Schwallwandhalterungen 103 zu erhöhen, umfasst die Flüssigkeitstankschale 101 Halterippen 111. Die Halterippen 111 erstrecken sich zwischen der Schwallwandhalterung 103 und der Innenwandung 105 der Flüssigkeitstankschale 101.

Die Schwallwände 107 dienen zum Vermindern der durch eine Flüssigkeit ausgeübten Kräfte, wenn sich der Flüssigkeitstank 100 beschleunigt. Daneben reduzieren die Schwallwände 107 Schwappgeräusche, indem diese als Elemente zur Beeinflussung der Flüssigkeitsbewegung im Flüssigkeitstank 100 dienen.

Die Schwallwandhalterungen 103 und die Flüssigkeitstankschale 101 sind aus einem einstückigen Kunststoffteil gebildet, das beispielsweise ein Spritzgussformteil sein kann.

Die Schwallwände 107 sind plattenförmig und aus dem gleichen Kunststoffmaterial wie die Flüssigkeitstankschale 101 hergestellt. Dies geschieht beispielsweise beim Spritzgießen der Flüssigkeitstankschale 101. In einer weiteren Ausführungsform können die Schwallwände 107 auch aus einem anderen Material wie die Flüssigkeitstankschale 101 hergestellt sein, beispielsweise durch Zweikomponenten-Spritzgießen (2k-Spritzgießen). In noch einer weiteren Ausführungsform sind die Schwallwände 107 in die Flüssigkeitstankschale 101 einsetzbar. Nach dem Einsetzen der Schwallwände 107 in die Flüssigkeitstankschale 101 können diese verschweißt werden. In einer weiteren Ausführungsform weisen die Schwallwände 107 eine schaufelförmig gekrümmte Form auf. Beispielsweise sind die Schwallwände 107 kreisbogenförmig oder parabelförmig ausgebildet.

Die Schwallwände 107 sind seitlich an den Schwallwandhalterungen 103 befestigt. Dadurch erhöht sich die Stabilität der Schwallwände 107, so dass diese auftretenden Kräften besser Stand halten. Die Unterseite der Schwallwand 107 ist mit der Innenseite der Flüssigkeitstankschale 101 verbunden.

Die Befestigung und Verbindung der Schwallwände 107 an den Schwallwandhalterungen 103 und der Innenseite 105 der Flüssigkeitstankschale 101 erfolgt beispielsweise dadurch, dass die Flüssigkeitstankschale 101 einstückig zusammen mit den Schwallwandhalterungen 103 und den Schwallwänden 107 hergestellt wird.

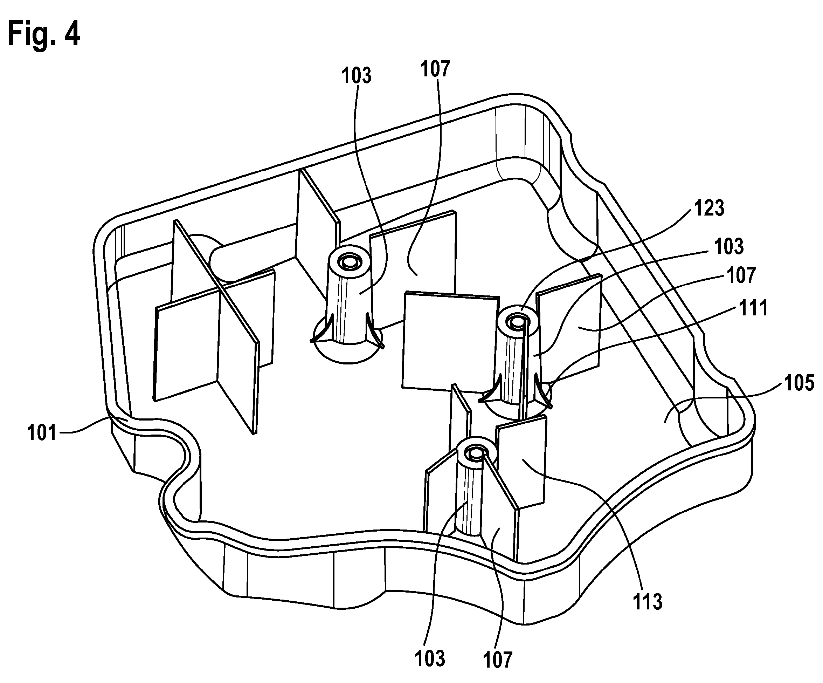

Fig. 4 zeigt eine weitere Ansicht der Flüssigkeitstankschale 101 ohne Schwalltopf 121. An jeder der Schwallwandhalterungen 103 sind mehrere Schwallwände 107 befestigt. Die Schwallwände 107 ragen radial von der Schwallwandhalterung 103 in unterschiedlichen Richtungen in das Innere des Flüssigkeitstanks 100 hinein. In einer weiteren Ausführungsform kämmen die Schwallwände 107 wechselseitig ineinander, so dass sich ein mäanderförmiger Fluss der Flüssigkeit zwischen der Schwallwänden ergibt. Daneben können die Schwallwandhalterungen 103 auch selbst durch Schwallwände gebildet werden. Beispielsweise kann eine erste Schwallwand durch eine zweite, die erste Schwallwand kreuzende Schwallwand abgestützt werden. Ebenfalls können die erste Schwallwand und die zweite Schwallwand in einem Winkel zueinander verbunden sein.

Im Allgemeinen ist die Anordnung der Schwallwände 107 jedoch nicht auf die gezeigte Anordnung beschränkt. Durch die Anordnung der Schwallwände 107 an der Innenwandung 105 kann die Form des Flüssigkeitstanks 100 zusätzlich stabilisiert und gefestigt werden.

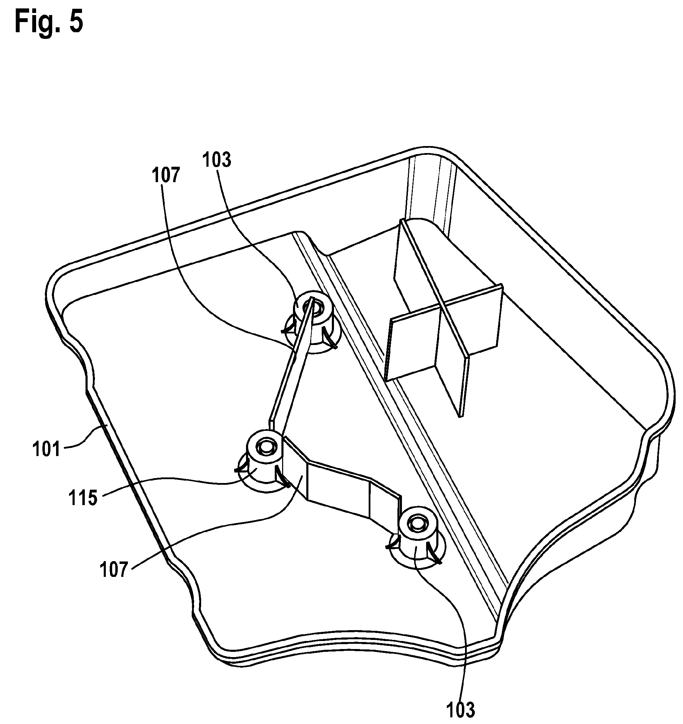

Fig. 5 zeigt eine weitere Ansicht der Flüssigkeitstankschale 101. In dieser Ausführungsform sind die Schwallwände 107 an einer Seite an einer ersten Schwallwandhalterung 103 befestigt und an einer anderen Seite an einer zweiten Schwallwandhalterung 115 befestigt. Dadurch erhöht sich die Stabilität der Schwallwände 107 zusätzlich. Die Schwallwände 107 weisen beispielsweise eine abgewinkelte Form auf. Dadurch erhöht sich die Stabilität zusätzlich.

Im Allgemeinen ist die Form der Schwallwände 107 nicht auf eine bestimmte Form begrenzt. Die Form der Schwallwände 107 kann im Querschnitt beispielsweise gerade, gebogen, abgewinkelt oder zickzackförmig sein.

Weiter können die Schwallwände 107 nicht gezeigte Öffnungen aufweisen, die dazu vorgesehen sind, dass die Flüssigkeit hindurchtreten kann, so dass diese an die vorgegebenen Stellen innerhalb des Flüssigkeitstanks 100 gelangt, beispielsweise eine Pumpe. Die Öffnungen können durch kreisförmige Aussparungen in den Schwallwänden gebildet sein. Zusätzlich kann in den Öffnungen ein Siebeinsatz gebildet sein, so dass Schmutzpartikel zurückgehalten werden. Die Öffnungen können im Bodenbereich angeordnet sein, so dass Flüssigkeit hindurch treten kann und dennoch Schwappgeräusche unterdrückt werden können.

Die Öffnungen können durch Ventilklappen (Spit-Back-Klappen) geschlossen werden, so dass die Flüssigkeit nur in einer bestimmten Richtung durch die in den Schwallwänden 107 angeordneten Öffnungen hindurchtreten kann. Die Ventilklappen können beispielsweise durch Deckel aus einem elastischen Material gebildet werden, die auf einer Seite der Schwallwand 107 befestigt sind und die Öffnung abdecken. Prallt die Flüssigkeit von dieser Seite auf die Schwallwand, so bleibt der Deckel geschlossen. Findet jedoch ein Flüssigkeitsstrom in der entgegengesetzten Richtung statt, öffnet sich der Deckel und die Flüssigkeit kann durch die Öffnung hindurchtreten.

Werden die Öffnungen in der Nähe der Innenwandung 105 des Flüssigkeitstanks 100 angeordnet, ergibt sich der Vorteil, dass starke Flüssigkeitsbewegungen in der Mitte des Flüssigkeitstanks 100 verhindert werden, um das Wegströmen der Flüssigkeit zum Rand des Flüssigkeitstanks 100 zu vermeiden.

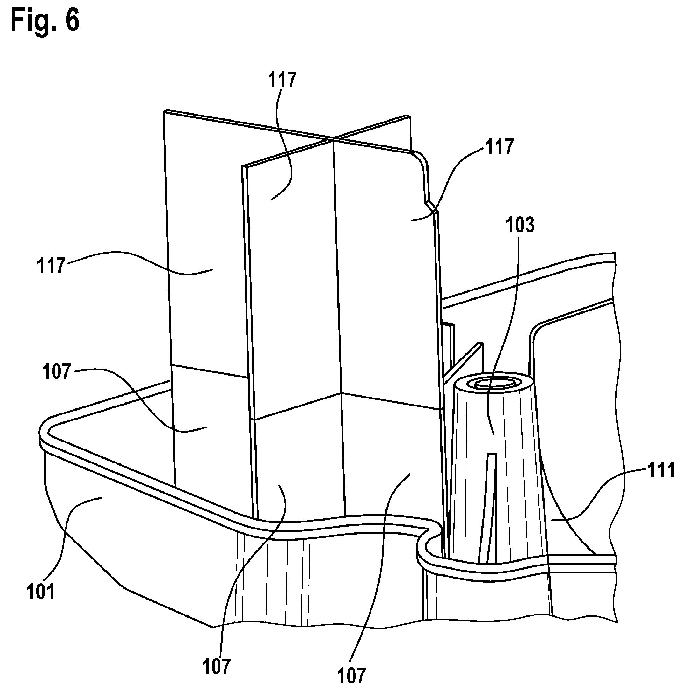

Fig. 6 zeigt eine Teilansicht der Flüssigkeitstankschale 101. Die Schwallwände 107 der Flüssigkeitstankschale 101 ragen in das Innere des Flüssigkeitstanks 100. Die entgegengesetzten Schwallwände 117 erstrecken sich in einer entgegengesetzten Richtung von der nicht gezeigten Oberschale.

Die Schwallwände 107 der Unterschale und die Schwallwände 117 der Oberschale sind derart angeordnet, dass deren Oberkanten beim Zusammensetzen der oberen Flüssigkeitstankschale 109 und der unteren Flüssigkeitstankschale 101 aufeinander liegen. Hierdurch ergibt sich eine zwischen der oberen Flüssigkeitstankschale 109 und der unteren Flüssigkeitstankschale 101 eine durchgehende, geschlossene Schwallwand. Die Oberkanten der oberen Schwallwand 117 und der unteren Schwallwand 107 können miteinander verbunden oder verschweißt sein, so dass sich die Stabilität und Verwindungssteifigkeit des Flüssigkeitstanks 100 noch weiter verbessert.

In einer anderen Ausführungsform sind die Schwallwände 107 der Unterschale und die Schwallwände 117 der Oberschale parallel versetzt zueinander angeordnet, so dass sich zwischen diesen ein Flüssigkeitskanal ergibt.

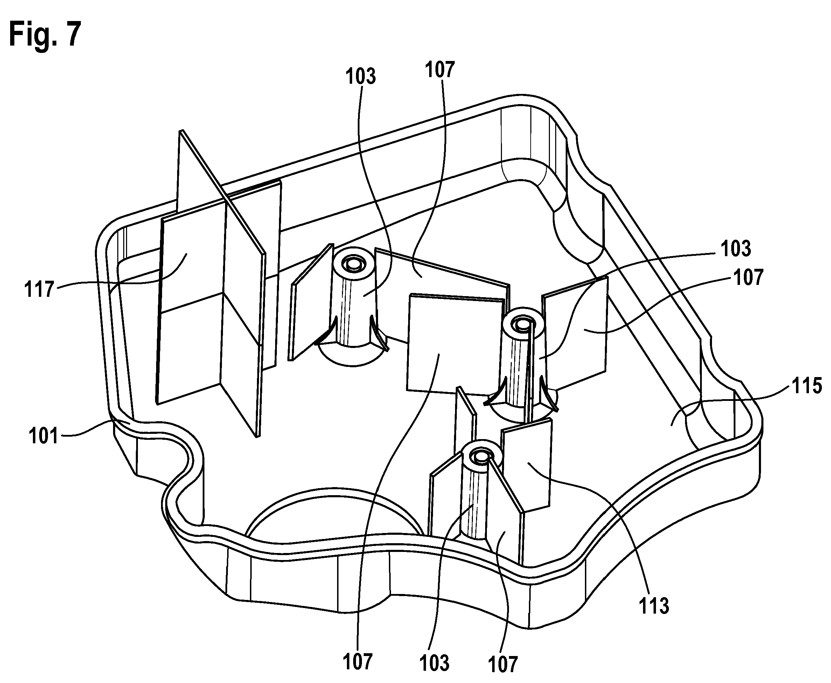

Fig. 7 zeigt eine weitere Ansicht der Flüssigkeitstankschale 101. Die Schwallwandhalterungen 103 können Führungselemente aufweisen, wie beispielsweise eine Nut oder eine Vertiefung, in die beim Zusammensetzen der oberen Flüssigkeitstankschale 109 und der unteren Flüssigkeitstankschale 101 die Schwallwand der Gegenseite einschiebbar ist. Die obere Flüssigkeitstankschale 109 kann die gleichen Merkmale wie die untere Flüssigkeitstankschale 101 aufweisen.

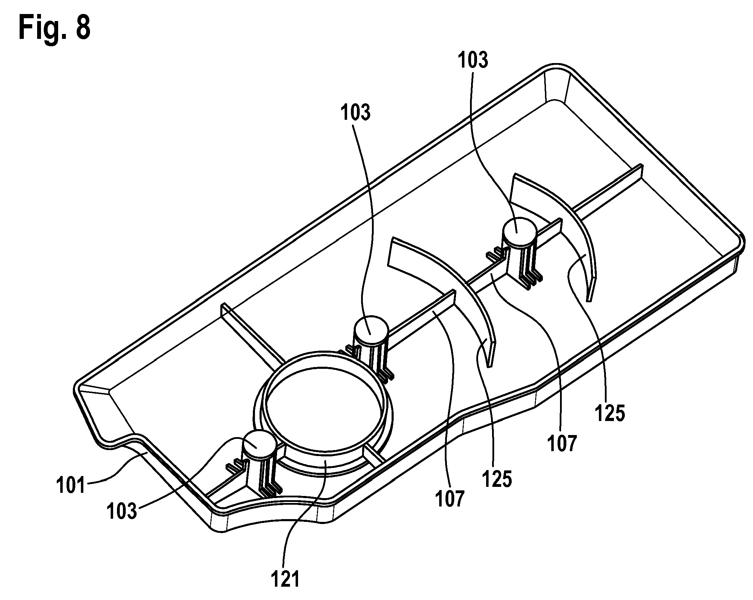

Fig. 8 zeigt eine weitere Ansicht der Flüssigkeitstankschale 101. Ausgehendend von den Schwallwandhalterungen 103 verlaufen die Schwallwände 107. Senkrecht zu den Schwallwänden 107 sind gebogene Schwallwände 125 auf der Innenseite des Flüssigkeitstanks 100 angeordnet. Die verbesserte Stabilität der Schwallwände 107 überträgt sich auf die Schwallwände 125, die die Schwallwände 107 kreuzen. Durch die gebogene Form der Schwallwände 125 wird der Flüssigkeit eine Vorzugsrichtung aufgeprägt.

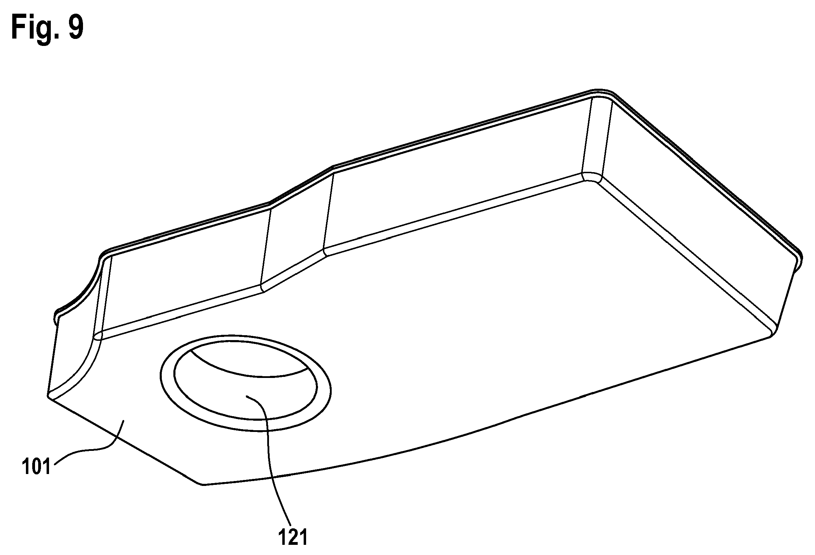

Fig. 9 zeigt eine Ansicht der Flüssigkeitstankschale 101 von unten. An der Außenseite der Flüssigkeitstankschale 101 ist ein Muster aus Verstärkungsrippen aufgebracht, um die Stabilität der Flüssigkeitstankschale 101 zu erhöhen.

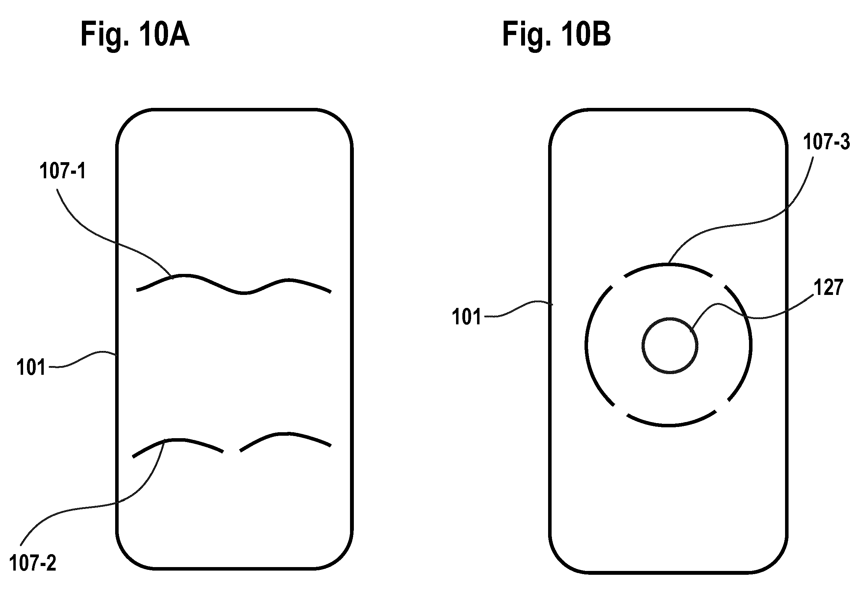

Fig. 10A zeigt eine schematische Ansicht der Flüssigkeitstankschale 101 mit gekrümmten Schwallwänden 107-1 und 107-2. Die Schwallwände 107-1 weisen eine wellenartige Form auf und ragen von der Innenseite der Flüssigkeitstankschale 101 in das Innere. Die Schwallwände 107-2 weisen eine bogenartige oder schaufelartige Form auf. Durch die gekrümmte Form der Schwallwände 107-1 und 107-2 wird der Vorteil erreicht, dass sich die Steifigkeit der Schwallwände 107-1 und 107-2 erhöht und ein Abknicken verhindert werden kann.

Fig. 10B zeigt eine schematische Ansicht der Flüssigkeitstankschale 101 mit einer Anordnung aus mehreren Schwallwänden 107-3 um die Pumpe 127 herum. Um die Pumpe 127 ist eine Anordnung aus mehreren Schwallwänden 107-2 vorgesehen sein, die insgesamt einen Bereich um die Pumpe 127 einschließen, so dass die Flüssigkeit beim Schwappen an der Pumpe 127 zusammengehalten wird. Die Schwallwände 107-3 sind konzentrisch auf einem Kreis um die Pumpe 127 herum angeordnet und kreisbogenförmig gekrümmt. Zwischen zwei Schwallwänden 107-3 befindet sich jeweils ein Zwischenraum, durch den die Flüssigkeit hindurchtreten kann. Allerdings kann auch eine spiralförmige Anordnung von Schwallwänden 107 vorgesehen sein.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder in den Figuren gezeigten Merkmale nicht beschränkt.

### BEZUGSZEICHENLISTE

- 100: Flüssigkeitstank
- 101: Flüssigkeitstankschale
- 103: Schwallwandhalterung
- 105: Innenwandung
- 107: Schwallwand
- 107-1: Schwallwand
- 107-2: Schwallwand
- 107-3: Schwallwand
- 109: Flüssigkeitstankschale
- 111: Halterippen
- 113: Schwallwand
- 115: Schwallwandhalterung
- 117: Schwallwand
- 119: Einfüllstutzen
- 121: Schwalltopf
- 123: Verbindungsfläche
- 125: Schwallwand
- 127: Pumpe

## Patentansprüche

1. Flüssigkeitstank (100), mit:
- einer Flüssigkeitstankschale (101);
- einer Schwallwandhalterung (103), welche sich von einer Innenwandung (105) der Flüssigkeitstankschale (101) erstreckt; und
- einer Schwallwand (107), die an der Schwallwandhalterung (103) befestigt ist;
- wobei die Schwallwandhalterung (103) ein säulenförmiger Abschnitt der Flüssigkeitstankschale (101) ist;
**dadurch gekennzeichnet,**
- **dass** der Flüssigkeitstank (100) eine weitere Schwallwand (113) umfasst, die an der Schwallwandhalterung (103) befestigt ist; und
- **dass** die Schwallwände (107, 113) radial von der Schwallwandhalterung (103) in unterschiedliche Richtungen in das Innere des Flüssigkeitstanks (100) hineinragen.

2. Flüssigkeitstank (100) nach Anspruch 1, wobei die Schwallwandhalterung (103) die Flüssigkeitstankschale (101) mit einer weiteren Flüssigkeitstankschale (109) verbindet.

3. Flüssigkeitstank (100) nach einem der vorangehenden Ansprüche, wobei die Flüssigkeitstankschale (101) ein Kunststoffformteil ist.

4. Flüssigkeitstank (100) nach einem der vorangehenden Ansprüche, wobei die Schwallwand (107) plattenförmig oder gekrümmt ist.

5. Flüssigkeitstank (100) nach einem der vorangehenden Ansprüche, wobei die Schwallwand (107) seitlich an der Schwallwandhalterung (103) befestigt ist.

6. Flüssigkeitstank (100) nach einem der vorangehenden Ansprüche, wobei die Schwallwandhalterung (103) Halterippen (111) zum Stabilisieren der Schwallwandhalterung (103) aufweist.

7. Flüssigkeitstank (100) nach einem der vorangehenden Ansprüche, wobei die Flüssigkeitstankschale (101) und die Schwallwandhalterung (103) einstückig durch ein Spritzgussteil gebildet sind.

8. Flüssigkeitstank (100) nach einem der vorangehenden Ansprüche, wobei die Schwallwand (107) zumindest eine Öffnung zum Hindurchfließen einer Flüssigkeit umfasst.

9. Flüssigkeitstank (100) nach Anspruch 8, wobei die Öffnung in der Schwallwand (107) in der Nähe der Innenwandung (105) des Flüssigkeitstanks (100) angeordnet ist.

10. Flüssigkeitstank (100) nach Anspruch 8 oder 9, wobei die Schwallwand (107) eine Ventilklappe zum Sperren einer Durchflussrichtung durch die Öffnung umfasst.

11. Flüssigkeitstank (100) nach einem der vorangehenden Ansprüche, wobei der Flüssigkeitstank (100) eine weitere Schwallwandhalterung (115) umfasst und die Schwallwand (107) an der weiteren Schwallwandhalterung (115) befestigt ist.

12. Flüssigkeitstank (100) nach einem der vorangehenden Ansprüche, mit einer weiteren Flüssigkeitstankschale (109), die mit der Flüssigkeitstankschale (101) verbunden ist.

## Claims

1. Liquid tank (100), comprising:
- a liquid tank shell (101);
- a baffle holder (103), which extends from an inner wall (105) of the liquid tank shell (101); and
- a baffle (107) which is fixed to the baffle holder (103);
- wherein the baffle holder (103) is a pillar-shaped section of the liquid tank shell (101); **characterized in that**,
the liquid tank (100) comprises a further baffle (113), which is fixed to the baffle holder (103), and
that
the baffles (107, 113) protrude radially from the baffle holder (103) in different directions into the interior of the liquid tank (100).

2. Liquid tank (100) according to claim 1, wherein the baffle holder (103) connects the liquid tank shell (101) with a further liquid tank shell (109).

3. Liquid tank (100) according to any one of the preceding claims, wherein the liquid tank shell (101) is a plastic molding.

4. Liquid tank (100) according to any one of the preceding claims, wherein the baffle (107) is plate-shaped or curved.

5. Liquid tank (100) according to any one of the preceding claims, wherein the baffle (107) is laterally fixed to the baffle holder (103).

6. Liquid tank (100) according to any one of the preceding claims, wherein the baffle holder (103) has retaining ribs (111) for stabilizing the baffle holder (103).

7. Liquid tank (100) according to any one of the preceding claims, wherein the liquid tank shell (101) and the baffle holder (103) are integrally formed by an injection-molded part.

8. Liquid tank (100) according to any one of the preceding claims, wherein the baffle (107) comprises at least an opening so that a liquid can flow through it.

9. Liquid tank (100) according to claim 8, wherein the opening in the baffle (107) is arranged close to the inner wall (105) of the liquid tank (100).

10. Liquid tank (100) according to claim 8 or 9, wherein the baffle (107) comprises a valve flap for closing a direction of a flow through the opening.

11. Liquid tank (100) according to any one of the preceding claims, wherein the liquid tank (100) comprises a further baffle holder (115) and the baffle (107) is fixed to the further baffle holder (115).

12. Liquid tank (100) according to any one of the preceding claims, comprising a further liquid tank shell (109) which is connected to the liquid tank shell (101).

## Revendications

1. Réservoir de liquide (100), comportant:
- une enveloppe de réservoir de liquide (101);
- un support de paroi brise-flots (103) qui s'étend depuis une paroi intérieure (105) de l'enveloppe de réservoir de liquide (101); et
- une paroi brise-flots (107) qui est fixée au support de la paroi brise-flots (103);
- le support de la paroi brise-flots (103) étant une section de l'enveloppe de réservoir de liquide (101) en forme de colonne;
**caractérisé en ce que**
le réservoir de liquide (100) comporte une autre paroi brise-flots (113) qui est fixée au support de la paroi brise-flots (103); et
que les parois brise-flots (107, 113) pénètrent radialement depuis le support de la paroi brise-flots (103) dans des directions différentes à l'intérieur du réservoir de liquide (100).

2. Réservoir de liquide (100) selon la revendication 1, dans lequel le support de la paroi brise-flots (103) connecte l'enveloppe de réservoir de liquide (101) à une autre enveloppe de réservoir de liquide (109).

3. Réservoir de liquide (100) selon l'une quelconque des revendications précédentes, l'enveloppe de réservoir de liquide (101) étant une pièce moulée en matière plastique.

4. Réservoir de liquide (100) selon l'une quelconque des revendications précédentes, la paroi brise-flots (107) étant en forme de plaque ou courbée.

5. Réservoir de liquide (100) selon l'une quelconque des revendications précédentes, dans lequel la paroi brise-flots (107) est fixée latéralement au support de la paroi brise-flots (103).

6. Réservoir de liquide (100) selon l'une quelconque des revendications précédentes, dans lequel le support de la paroi brise-flots (103) comporte des nervures de maintien (111) pour stabiliser le support de la paroi brise-flots (103).

7. Réservoir de liquide (100) selon l'une quelconque des revendications précédentes, dans lequel l'enveloppe de réservoir de liquide (101) et le support de la paroi brise-flots (103) sont formés d'une seule pièce par une pièce moulée par injection.

8. Réservoir de liquide (100) selon l'une quelconque des revendications précédentes, dans lequel la paroi brise-flots (107) comporte au moins une ouverture pour l'écoulement d'un fluide à travers celle-ci.

9. Réservoir de liquide (100) selon la revendication 8, dans lequel l'ouverture est disposée sur la paroi brise-flots (107) près de la paroi intérieure (105) du réservoir de liquide (100).

10. Réservoir de liquide (100) selon la revendication 8 ou 9, dans lequel la paroi brise-flots (107) comporte un clapet de soupape pour bloquer une direction d'écoulement à travers l'ouverture.

11. Réservoir de liquide (100) selon l'une quelconque des revendications précédentes, dans lequel le réservoir de liquide (100) comporte un autre support de paroi brise-flots (115) et la paroi brise-flots (107) est fixée à l'autre support de paroi brise-flots (115).

12. Réservoir de liquide (100) selon l'une quelconque des revendications précédentes, comportant une autre enveloppe de réservoir de liquide (109) qui est connectée à l'enveloppe de réservoir de liquide (101).
